# EUROPEAN PATENT APPLICATION

(11) **EP 4 804 096 A1**
(43) Date of publication of application: **09.09.2026**
(21) Application number: 25217142.6
(22) Date of filing: 19.11.2025
(51) Int. Cl.: G06Q 10/20, B66B 5/00

(54) **SYSTEM AND METHOD FOR PROVIDING AI ASSISTED MAINTENANCE TO A PEOPLE MOVER**

(30) Priority: 03.03.2025 IN 202511018642
(71) Applicant: Otis Elevator Company, Farmington, Connecticut 06032 (US)
(72) Inventor: Marpu, Appalaraju, 500081 Hyderabad (IN); Keshri, Amit Kumar, 500081 Hyderabad (IN)
(74) Representative: Schmitt-Nilson Schraud Waibel Wohlfrom Patentanwälte Partnerschaft mbB

(57) **Abstract**

A system providing AI assisted maintenance, having: a device controller, coupled to a people mover, that transmits telemetry data over a first communication channel; a system controller module receives the telemetry data; a mobile device transmits mobile device data to the system controller module over a second communication channel; the system controller module: renders a first determination from the received telemetry or mobile device data that the people mover is being serviced to resolve a technical condition; render a second determination of an occurrence of a trigger event from the received data while the people mover is being serviced; apply the received data to a generative AI model to identify one or more steps to resolve the technical condition of the people mover; and transmit, to the mobile device, resolution data including the one or more steps to resolve the technical condition of the people mover.

## Description

The embodiments described herein relate to a distributed people mover system and more specifically to a system and method for providing AI assisted maintenance to a people mover.

A mechanic at a site of a people mover may perform different kinds of maintenance operations, such as command application operations, node download operations, and other operations. Issues may arise, e.g., if the mechanic is unfamiliar with the people mover system, or makes one or more errors in execution of a procedure. To resolve issues, the mechanic may refer to documentation or ask other mechanics for assistance. However, failure of the mechanic to smoothly execute operations is inefficient and results in extra costs.

Disclosed is a system configured for providing AI assisted maintenance to a people mover, including: a device controller operationally coupled to the people mover, wherein the device controller is configured to transmit telemetry data over a first communication channel; a system controller module configured to receive the telemetry data; a mobile device configured to transmit mobile device data to the system controller module over a second communication channel; and wherein the system controller module is configured to: render a first determination from the telemetry data or the mobile device data that the people mover is being serviced to resolve a technical condition; render a second determination of an occurrence of a trigger event from the telemetry data or the mobile device data while the people mover is being serviced; apply the telemetry data or the mobile device data to a generative AI model to identify one or more steps to resolve the technical condition of the people mover; and transmit, to the mobile device, resolution data including the one or more steps to resolve the technical condition of the people mover.

Particular embodiments further may include at least one, or a plurality of, the following optional features, alone or in combination with each other:
In addition to one or more aspects of the system or as an alternate, the trigger event is one or more of a continued duration of maintenance that is above a threshold, or an occurrence of one or more error codes, as implicated in the telemetry data.

In addition to one or more aspects of the system or as an alternate, the trigger event is a query for assistance, as indicated in the mobile device data.

In addition to one or more aspects of the system or as an alternate, the generative AI model is configured to apply natural language processing to respond to queries presented in a natural language format in the mobile device data.

In addition to one or more aspects of the system or as an alternate, the generative AI model is configured to process video, audio and text integrated into the resolution data.

In addition to one or more aspects of the system or as an alternate, the generative AI model is trained on data including one or more of commissioning data, heartbeat data, code version update data and maintenance data.

In addition to one or more aspects of the system or as an alternate, the telemetry data includes sensor data from a sensor coupled to the people mover, wherein the sensor includes one or more of a speed sensor, a vibration sensor, a load sensor, an accelerometer, a door operation sensor and a health sensor.

In addition to one or more aspects of the system or as an alternate, the system controller module is configured to detect from the sensor data sensed by the health sensor a mechanical failure in the people mover.

In addition to one or more aspects of the system or as an alternate, the first communication channel utilizes a wired or a wireless protocol and the second communication channel utilizes a wireless protocol that is the same as or different from the first communication channel.

In addition to one or more aspects of the system or as an alternate, the people mover is an elevator system, a moving walkway or an escalator.

Disclosed is a method of operating a system to provide AI assisted maintenance to a people mover, including: receiving over a first communication channel, by a system controller module from the people mover having a device controller, telemetry data; receiving, by the system controller module from a mobile device over a second communication channel, mobile device data; rendering, by the system controller module, a first determination from the telemetry data or the mobile device data that the people mover is being serviced to resolve a technical condition; rendering, by the system controller module, a second determination of an occurrence of a trigger event from the telemetry data or the mobile device data while the people mover is being serviced; applying, by the system controller module, the telemetry data or the mobile device data to a generative AI model to identify one or more steps to resolve the technical condition of the people mover; and transmitting, by the system controller module, to the mobile device, resolution data including the one or more steps to resolve the technical condition of the people mover.

Particular embodiments further may include at least one, or a plurality of, the following optional features, alone or in combination with each other:
In addition to one or more aspects of the method or as an alternate, the method includes determining, by the system controller module, the occurrence of the trigger event from one or more of a continued duration of maintenance that is above a threshold, or an occurrence of one or more error codes, as implicated in the telemetry data.

In addition to one or more aspects of the method or as an alternate, the method includes determining, by the system controller module, the occurrence of the trigger event from a query for assistance, as indicated in the mobile device data.

In addition to one or more aspects of the method or as an alternate, the method includes applying, by the generative AI model, natural language processing to respond to queries presented in a natural language format in the mobile device data.

In addition to one or more aspects of the method or as an alternate, the method includes processing, by the generative AI model, video, audio and text integrated into the resolution data.

In addition to one or more aspects of the method or as an alternate, the method includes training the generative AI model on data including one or more of commissioning data, heartbeat data, code version update data and maintenance data.

In addition to one or more aspects of the method or as an alternate, the method includes integrating, in the telemetry data, sensor data from a sensor, and the sensor data includes one or more of a speed sensor, a vibration sensor, a load sensor, an accelerometer, a door operation sensor and a health sensor.

In addition to one or more aspects of the method or as an alternate, the method includes detecting, by the system controller module from the sensor data from the health sensor, a mechanical failure in the people mover.

In addition to one or more aspects of the method or as an alternate, the method includes communicating via the first communication channel utilizing a wired or a wireless protocol and communicating via the second communication channel via a wireless protocol that is the same as or different from the first communication channel.

In addition to one or more aspects of the method or as an alternate, the people mover is an elevator system, a moving walkway or an escalator.

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 shows a distributed system according to the embodiments that is configured to provide AI assistance to resolve technical issues for a mechanic performing maintenance on a people mover system; and
FIGS. 3 shows a flowchart of a method of providing AI assistance to resolve technical issues for a mechanic performing maintenance on a people mover.

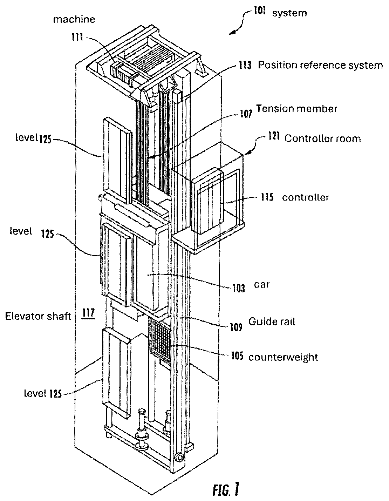

FIG. 1 is a perspective view of an elevator system 101 including an elevator car 103, a counterweight 105, a tension member 107, a guide rail (or rail system) 109, a machine (or machine system) 111, a position reference system 113, and an electronic elevator controller (controller) 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft (or hoistway) 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the hoistway or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1. In one example, embodiments disclosed herein may be applicable conveyance systems such as an elevator system 101 and a conveyance apparatus of the conveyance system such as an elevator car 103 of the elevator system 101. In another example, embodiments disclosed herein may be applicable conveyance systems such as an escalator system and a conveyance apparatus of the conveyance system such as a moving stair of the escalator system and/or a moving walkway system.

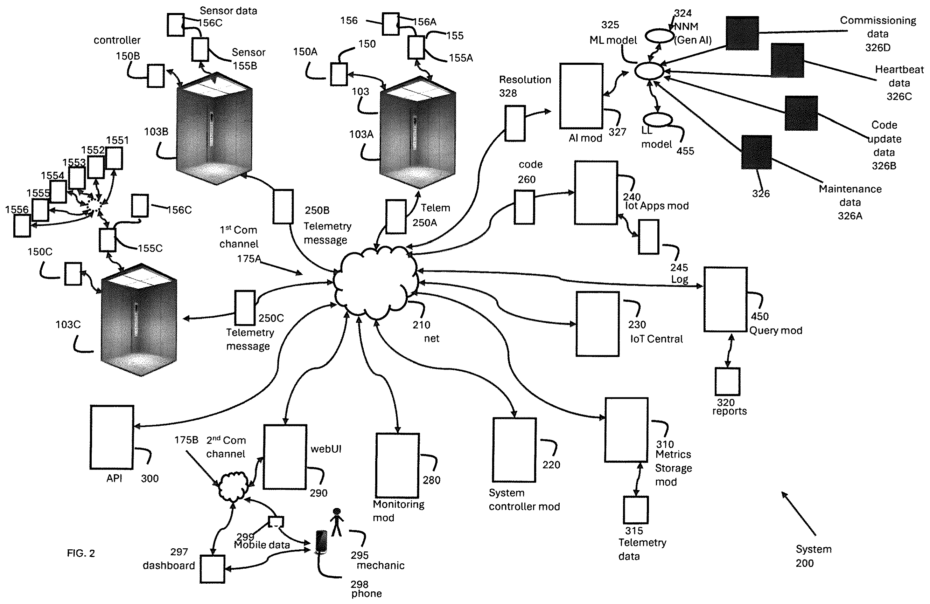

Turning to FIG. 2, disclosed is a distributed (e.g., cloud) system 200. While various modules are illustrated for performing discrete functions in FIG. 2, it is to be appreciated that two or more of the functions may be combined into a common module or alternatively the functions may be further divided into additional modules.

The system 200 includes a network 210 which may be a wide area network such as the internet. Devices 103A-103C (generally 103, which may also be referred to as people movers), which may be elevators, escalators, moving walkways or the like, and/or individual components thereof, as nonlimiting embodiments, may be IoT (internet of things) devices, i.e., devices operationally coupled over the internet over a first communication channel 175A. The first communication channel 175 may utilize a wired channel, such as ethernet, or a wireless channel, e.g., a wide area network or a cellular network, discussed in greater detail below. Each of the devices 103 may have a device controller 150A-150C (generally 150) and a sensor 155A-155C (generally 155) configured to transmit sensor data 156A-156C (generally 156). The sensor 155 may include one or more of a speed sensor 1551, a vibration sensor 1552, a load sensor 1553, an accelerometer 1554, a door operation sensor 1555 and a health sensor 1556, e.g., that is configured to sense a mechanical failure of the device 103. The system may include additional sensors-the foregoing list should not be viewed as limiting.

The system 200 may have a controller module (or service) 220, an IoT central module 230 or similar platform, and an IoT application and data storage module 240 (for simplicity an application module or an IoT app module 240). The IoT central module 230 is a known IoT application platform as a service (aPaaS) with user-engageable dashboards that centralizes device data, allows for data-driven workflows, and the creation of custom apps.

IoT app module 240 is utilized for storage and other processes running in a cloud service. The message comes from the devices 103 (e.g., in a raw format or as processed data, as nonlimiting examples) and are extracted, transformed into a readable/storable format and loaded onto databases for the front end applications to consume and publish. The system controller module 220 instructs the IoT central module 230 to register the devices 103 with the IoT app module 240 to enable the IoT app module 240 to receive telemetry data 250A-250C (generally 250), which include the sensor data 156, from the devices 103 and to transmit code 260, such as updates, to the devices 103. The devices 103 may also interact in other ways with each other and the cloud, e.g., to request updates, voice communications, etc. It is to be appreciated that the telemetry data 250 may include different types of data, such as logs, metrics, events, and traces. Logs capture detailed events or actions within a system, metrics track performance over time, events highlight significant occurrences, and traces map the flow of processes across different systems. Together, these pieces form a comprehensive picture of the system's health and performance. There may be hundreds of thousands of the devices 103, each sending production (e.g., actual) telemetry data 250 to the IoT app module 240, each message related to different aspects of the devices 103, such as the operational condition of the breaks, doors, etc., throughout the day.

The IoT app module 240 may generate logs 245, daily, indicative of received telemetry data 250 and transmitted code 260. A monitor and capture metrics module (for simplicity, a monitoring module) 280 may monitor the logs generated by the IoT app module 240. The logs 245 may be forwarded to a metrics storage module 310 where telemetry metrics data 315 is derived from the logs 245. A query module 450 may generate reports 320 from the telemetry metrics data 315, which may be viewable via an interactive performance dashboard 297, accessible via a web interface module 290, e.g., on a mobile device, i.e., a mobile device 298, e.g., phone, tablet, computer, smartwatch, etc. as a nonlimiting embodiment. With this configuration, errors in the communications can be identified by a user 295 who may be a technician. The user may engage an API module (or gateway) 300 to engage the system controller module 220. The mobile device 298 may communicate with, e.g., the system controller module 220, by transmitting mobile device data 299 over a second communication channel 175B which may be a cellular network or a wide area network.

More specifically, the figure shows the user 295 that engages the web interface module 290 to communicate with the system controller module 220 via the API module 300 and to view the performance dashboard 297, e.g., on their mobile device 298. The IoT central module 230 is shown that registers the devices 103 with the IoT app module 240. The registration establishes trust in device connectivity and allows messages to traverse between devices and the cloud in both directions, i.e., device to cloud and cloud to device, according to predefined load scenarios. The monitoring module 280 may monitor telemetry logs 245 generated by the IoT app module 240. The query module 450 generates telemetry metrics data 315 and reports 320 from the telemetry metrics data 315, which may be stored on the metrics storage module 310 and visualized on a performance dashboard 297 over the web interface module 290 to identify errors logged over the past day (as an example) at the IoT app module 240.

According to the embodiments, a machine learning model (MLM) 325 (generally referred to as a neural network model or a generative AI model 324), may be within an AI module 327 or located in one of the identified modules, such as the query module 450 utilized to generate the reports 320. The MLM 325 may be engaged by the user 295, utilizing natural language, when requesting a report, e.g., seeking a solution to a technical operational issue related to operation of the devices 103. In response, the MLM 325 may provide recommendations on remedying issues identified in the telemetry logs 245, e.g., based on accumulated data utilized to train the MLM 325.

As can be appreciated, the MLM 325, may be in a learning mode (training mode), where it is training on datasets, such as obtained from the sensor data 156 or other data identified below. In this mode, the MLM 325 learns patterns and relationships within the data to make accurate predictions or decisions. In this mode, the parameters of the MLM 325 are adjusted based on the input data and the desired output. In a production mode (inference mode), once the MLM 325 is trained and validated, and is deployed, the MLM 325 uses the learned parameters to make predictions on new, unseen data, and provides real-time or batch predictions to end-users or other systems.

Sources of information for the learning mode of the MLM 325 may include data 326, including device maintenance data 326A, e.g., obtained from mechanics engaging apps on their phones 298 that transmit relevant data to the system controller module 220. The data 326 may include code download (e.g., update) data 326B, e.g. obtained from the IoT app module 240. The data 326 may include heartbeat data 326C from the telemetry data 250 including performance, alarms and event data. The data 326 may also include initial commissioning data 326D, e.g., obtained from the IoT central module 230 when registering the device 103.

Similarly, according to the embodiments, the AI module 327, or e.g., the query module 450, may be equipped with a large language model (LLM) 455 as another machine learning model 325 or generative AI model 324. The LLM 455 may be trained using typical techniques, e.g., collecting and processing datasets that are relevant to the operation of the devices 103, applying a model architecture such as transformers which can handle long-range dependencies in text, applying hyperparameter tuning to the training data batches to adjust the size and configuration of the training data, applying optimization technique to improve accuracy, and thereafter iteratively tuning the LLM 455. The LLM 455 may be trained to respond to technicians 295 who submit queries, e.g., to the system controller module 220, for reports 320 about the current, historical, and predictable (e.g., statistically) future operational conditions of the system 200. That is, while the MLM 325 may be utilized to identify technical operational issues in the system 200 and recommend solutions, the LLM 455 may be utilized to enable a communication exchange with a technician 295 utilizing natural language.

It is to be appreciated that the MLM 325 may be trained to respond to natural language input without the need for a separate LLM 455, e.g., utilizing natural language processing (NLP). NPL is a subfield of machine learning focused on the interaction between computers and human language.

According to the embodiments, where the devices 103 are elevator cars, the trained generative AI model 324 may be able to respond to queries such as "how do we fix a door motion issue for elevator car number (xxx) located at (yyyy), where the issue presents as (zzz)."

It can be appreciated that, with the disclosed embodiments, technicians 295 can type their queries in the natural language into their phones 298 (or other mobile device), and the system 200 will provide an answer based on amassed data that is processed by the generative AI model 324. The system 200 enables the saving of time and effort, and provides more accurate and reliable solutions to the technicians 295.

As indicated, while various modules are illustrated for performing discrete functions in FIG. 2, it is to be appreciated that two or more of the functions may be combined into a common module or alternatively the functions may be further divided into additional modules. As such reference to the system controller module 220 herein may implicate functions described as applicable to the system controller module 220 or other modules. In addition, or as an alternative, the system controller module 220 may facilitate communications between and operations of the various modules shown in FIG. 2.

It is to be further appreciated that the utilization of the distributed cloud system is not intended on limiting the scope of the embodiments. That is, the mobile device 298 of the technician 295 may be configured to perform the processes identified herein as being performed over the distributed system. This would be useful in situations where, for example, the mobile device 298, in possession of the technician 295, is in a location where it cannot obtain a signal to communicate with the other components of the distributed system 200. Having the mobile device 298 equipped to perform operations identified as being performed over the distributed system would also avoid latency issues associated with communication exchanges over a network.

According to the embodiments, the system 200 is configured for providing AI assisted maintenance to the people mover 103. The people mover 103 is an elevator system 101, a moving walkway or an escalator. The system 200, in addition to the people mover 103, includes the device controller 150 operationally coupled to the people mover 103. The device controller 150 is configured to transmit telemetry data 250 over the first communication channel 175A. The system controller module 220 is configured to receive the telemetry data 250. The mobile device 298 is configured to transmit mobile device data 299 to the system controller module 220 over the second communication channel 175B.

According to the embodiments, the system controller module 220 is configured to render a first determination from the telemetry data 250 or the mobile device data 299 that the people mover 103 is being serviced to resolve a technical condition. The system controller module 220 is configured to render a second determination of the occurrence of a trigger event from the telemetry data 250 or the mobile device data 299 while the people mover 103 is being serviced. The system controller module 220 is configured to apply the telemetry data 250 or the mobile device data 299 to a generative AI model 324 to identify one or more steps to resolve the technical condition of the people mover 103. The system controller module 220 is configured to transmit, to the mobile device 298, resolution data 328 including the one or more steps to resolve the technical condition of the people mover 103.

In one embodiment, the trigger event is one or more of a continued duration of maintenance that is above a threshold, e.g., an hour, or an occurrence of one or more error codes, as implicated in the telemetry data 250. In one embodiment, the trigger event is a query for assistance, as indicated in the mobile device data 299. In one embodiment, the generative AI model 324 is configured to apply natural language processing to respond to queries presented in a natural language format in the mobile device data. In one embodiment, the generative AI model 324 is configured to process video, audio and text integrated into the resolution data 328. In one embodiment, the generative AI model 324 is trained on data including one or more of commissioning data 326D, heartbeat data 326C, code version update data 326B and maintenance data 326A. In one embodiment, the telemetry data 250 includes sensor data 156 from the sensor 155 coupled to the people mover 103. The sensor 155 includes one or more of a speed sensor 1551, a vibration sensor 1552, a load sensor 1553, an accelerometer 1554, a door operation sensor 1555 and a health sensor 1556. In one embodiment, the system controller module 220 is configured to detect from the sensor data 156 sensed by the health sensor a mechanical failure in the people mover 103. In one embodiment, the first communication channel 175A utilizes a wired or wireless protocol and the second communication channel 175B utilizes a wireless protocol that is the same as or different from the first communication channel 175A.

During operation of the system, when a mechanic encounters any failure as specified in a maintenance documents then mechanic may submit to the system, via the mobile device, one or more queries using natural language such as "how to switch that button" or "how to flip that slot after software download" or so on. During operation/failure scenarios, if a mechanic needs more clarity on a specific operation, the mechanic may receive from the system, via the mobile device, images or text by submitting to the system, via the mobile device, queries such as "where is that component placed" or "how does the component look like" or so on. While fixing issue, the mechanic may submit the system, via the mobile device, queries such as "how to do it" and the generative AI model would provide details, via the mobile device, which may include text and images, i.e., to provide additional clarity.

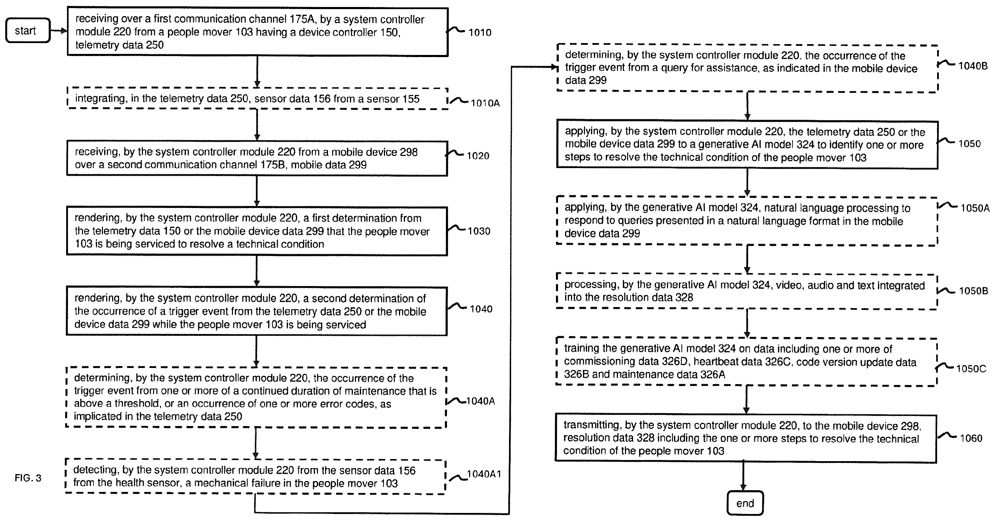

Turning to FIG. 3, a flowchart shows a method of providing AI assisted maintenance to a people mover 103. The people mover 103 is an elevator system 101, a moving walkway or an escalator. In FIG. 3, boxes in dashed lines in the flowchart represent further explanations, including alternative embodiments, of one or more preceding steps and are not intended to limit the scope of the embodiments.

As shown in block 1010, the method may include receiving over a first communication channel 175A, by a system controller module 220 from a people mover 103 having a device controller 150, telemetry data 250. As shown in block 1010A, the method may include integrating, i.e., integrating, in the telemetry data 250, sensor data 156 from a sensor 155. The sensor data 156 may include one or more of a speed sensor 1551, a vibration sensor 1552, a load sensor 1553, an accelerometer 1554, a door operation sensor 1555 and a health sensor 1556.

As shown in block 1020, the method may include receiving, by the system controller module 220 from a mobile device 298 over a second communication channel 175B, mobile device data 299. Specifically, communicating via the first communication channel 175A utilizes a wired or wireless protocol and communicating via the second communication channel 175B utilizes a wireless protocol that is the same as or different from the first communication channel 175A. As shown in block 1030, the method may include rendering, by the system controller module 220, a first determination from the telemetry data 250 or the mobile device data 299 that the people mover 103 is being serviced to resolve a technical condition.

As shown in block 1040, the method may include rendering, by the system controller module 220, a second determination of the occurrence of a trigger event from the telemetry data 250 or the mobile device data 299 while the people mover 103 is being serviced. For example, as shown in block 1040A, the method may include determining, by the system controller module 220, the occurrence of the trigger event from one or more of a continued duration of maintenance that is above a threshold, or an occurrence of one or more error codes, as implicated in the telemetry data 250. More specifically, for example, as shown in block 1040A1, the method may include detecting, by the system controller module 220 from the sensor data 156 from the health sensor, a mechanical failure in the people mover 103. In addition or alternatively, as shown in block 1040B, the method may include determining, by the system controller module 220, the occurrence of the trigger event from a query for assistance, as indicated in the mobile device data 299.

As shown in block 1050, the method may include applying, by the system controller module 220, the telemetry data 250 or the mobile device data 299 to a generative AI model 324 to identify one or more steps to resolve the technical condition of the people mover 103. As shown in block 1050A, the method includes applying, by the generative AI model 324, natural language processing to respond to queries that may be presented in a natural language format in the mobile device data 299. As shown in block 1050B, the method may include processing, by the generative AI model 324, video, audio and text integrated into the resolution data 328. As shown in block 1050C, the method may include training the generative AI model 324 on data including one or more of commissioning data 326D, heartbeat data 326C, code version update data 326B and maintenance data 326A.

As shown in block 1060, the method may include transmitting, by the system controller module 220, to the mobile device 298, resolution data 328 including the one or more steps to resolve the technical condition of the people mover 103.

The embodiments utilize a generative AI model, based on the operation triggered by mechanic, if mechanic is unable to proceed further on the triggered operation then resolution steps will be provided automatically to mechanic so mechanic will complete the required operation.

According to the above embodiments, a mechanic at a site is connected to an elevator controller utilizing mobile application (app) on a mobile device. The mechanic performs an operation, e.g., a node (elevator) download operation or a command app operation or another other elevator operation. The mechanic is unable to complete the operation, which triggers an AI application, such as a generative AI model accessible via the mobile device. The trigger may be a time delay, an error code communicated to the mobile device by the elevator controller, or information fed to the mobile device from the elevator controller utilizing an elevator mounted sensor. The AI model, based on the trigger, may analyze the condition of the elevator and provide instructions for resolving the error. The AI model may provide guidance in the form of resolution steps via the mobile device to the mechanic to resolve the operation.

Benefits of the embodiments include the utilization of a generative AI model to automatically guide a mechanic to complete the operation, e.g. to resolve any technical issue and train the mechanic. The AI model may automatically analyze failures and accurately provide resolution steps. The embodiments therefore provide for the saving of time and costs associated with resolving technical issues associated with the maintenance of elevator.

Regarding the implementation of artificial intelligence (AI) identified herein, expressly or inherently, a machine learning model, e.g., part of an artificial intelligence (AI) system, may be utilized in the embodiments. An AI system simulates human intelligence using a digital computer or a machine controlled by a digital computer, senses the environment, e.g., using available sensors including speed, acceleration, vibration, sound, video and the like, and acquires knowledge and uses the knowledge to obtain the optimum results. The AI infrastructure includes technologies such as the sensors, dedicated artificial intelligence chips, cloud computing, distributed storage, big data processing technologies, operation/interaction systems, mechatronics, and the like. Some implementations of AI according to the embodiments utilize computer vision technology, a voice processing technology, a natural language processing technology, machine learning/deep learning and the like.

Some implementations of AI according to the embodiments utilize pre-trained (PT) machine translation models that adopt a sequence-to-sequence (sequence-sequence or S-S) framework based on a neural network. The S-S framework is a framework including an encoder-decoder structure. The encode-decoder structure converts an input sequence into another sequence output. In this framework, the encoder converts the input sequence into vectors, and the decoder accepts the vectors and generates the output sequence in time order. The encoder and the decoder may utilize the same type of neural network (NN) model, or may utilize different types of neural network models. The neural network model may be a CNN (Convolutional Neural network) model, an RNN (redundant Neural network) model, a long-short-term memory (LSTM) model, a delay network model, a gated CNN model, or the like.

The trained machine learning models, once trained, can analyze the input data, and in one or more aspects, predict and/or characterize features included in the sensed data. In the case of video, in one non-limiting example, the sensed data can include sequential images and/or encoded video data (e.g., using digital video file/stream formats and/or codecs, such as MP4, MOV, AVI, WEBM, AVCHD, OGG, and/or the like including combinations and/or multiples thereof). The prediction and/or characterization of the features can include segmenting the video data. In some instances, the one or more trained machine learning models include or are associated with a preprocessing or augmentation (e.g., intensity normalization, resizing, cropping, and/or the like including combinations and/or multiples thereof) that is performed prior to segmenting the video data. An output of the one or more trained machine learning models can include a prediction of aspects of the video data, a location and/or position of the aspects within the video data, and/or state of the aspects. The location can be a set of coordinates in an image/frame in the video data. The trained machine learning models, in one or more examples, are trained to perform higher-level predictions and tracking.

Similar predictions can be made with regard to the operational state of a device by analyzing sensor data captured while the device is utilized and applying the data to trained machine learning models. For example, utilizing a serviced learning technique, the model is trained on known inputs and outputs from legacy events to predict future outputs from future inputs. The models may be evaluated so that variables may be weighted or re-weighted to more accurately correlate inputs and outputs, and the model may be re-retrained as more inputs and outputs are collected. For example, the prediction of a state of multiple devices of an operationally integrated system of devices may be obtained utilizing a trained model. Data may be captured, including operational sounds, vibrations, etc., for one (or fewer than all) of the devices, and the captured data may be run through a trained model that is trained to identify the influence (constructive and destructive) that the devices have on each other in their respective operational states, including when they are functioning within and outside of acceptable tolerances.

Regarding telecommunication implementations identified herein, expressly or inherently, wireless connections identified above may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Other applicable protocols include Low Power WAN (LPWAN), which is a wireless wide area network (WAN) designed to allow long-range communications at a low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radio-frequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and Category M1 internet of things (Cat M1-IOT). Wireless communications for the disclosed systems may include cellular, e.g. 2G/3G/4G (etc.). The above is not intended on limiting the scope of applicable wireless technologies.

Wired connections identified above may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a sever/client protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allows microcontrollers and devices to communicate with each other in applications without a host computer. CAN is a message-based protocol released by the International Organization for Standards (ISO). The above is not intended on limiting the scope of applicable wired technologies.

As indicated, when data is transmitted over a network between end processors, the data may be transmitted in raw form or may be processed in whole or part at any one of the end processors or an intermediate processor, e.g., at a cloud service or other processor. The data may be parsed at any one of the processors, partially or completely processed or compiled, and may then be stitched together or maintained as separate packets of information.

Regarding computing technologies identified herein, expressly or inherently, each processor identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations,
element components, and/or groups thereof.

## Claims

1. A system configured for providing AI assisted maintenance to a people mover, comprising:
a device controller operationally coupled to the people mover,
wherein the device controller is configured to transmit telemetry data over a first communication channel;
a system controller module configured to receive the telemetry data;
a mobile device configured to transmit mobile device data to the system controller module over a second communication channel; and
wherein the system controller module is configured to:
render a first determination from the telemetry data or the mobile device data that the people mover is being serviced to resolve a technical condition;
render a second determination of an occurrence of a trigger event from the telemetry data or the mobile device data while the people mover is being serviced;
apply the telemetry data or the mobile device data to a generative AI model to identify one or more steps to resolve the technical condition of the people mover; and
transmit, to the mobile device, resolution data including the one or more steps to resolve the technical condition of the people mover.

2. The system of claim 1, wherein the trigger event is one or more of a continued duration of maintenance that is above a threshold, or an occurrence of one or more error codes, as implicated in the telemetry data; and/or wherein the trigger event is a query for assistance, as indicated in the mobile device data.

3. The system of claim 2, wherein the generative AI model is configured to apply natural language processing to respond to queries presented in a natural language format in the mobile device data; and/or wherein the generative AI model is configured to process video, audio and text integrated into the resolution data.

4. The system of any of claims 1 to 3, wherein the generative AI model is trained on data including one or more of commissioning data, heartbeat data, code version update data and maintenance data.

5. The system of any of claims 1 to 4, wherein the telemetry data includes sensor data from a sensor coupled to the people mover, wherein the sensor includes one or more of a speed sensor, a vibration sensor, a load sensor, an accelerometer, a door operation sensor and a health sensor.

6. The system of claim 5, wherein the system controller module is configured to detect from the sensor data sensed by the health sensor a mechanical failure in the people mover.

7. The system of any of claims 1 to 6, wherein the first communication channel utilizes a wired or a wireless protocol and the second communication channel utilizes a wireless protocol that is the same as or different from the first communication channel.

8. The system of any of claims 1 to 7, wherein the people mover is an elevator system, a moving walkway or an escalator.

9. A method of operating a system to provide AI assisted maintenance to a people mover , comprising:
receiving over a first communication channel, by a system controller module from the people mover having a device controller, telemetry data;
receiving, by the system controller module from a mobile device over a second communication channel, mobile device data;
rendering, by the system controller module, a first determination from the telemetry data or the mobile device data that the people mover is being serviced to resolve a technical condition;
rendering, by the system controller module, a second determination of an occurrence of a trigger event from the telemetry data or the mobile device data while the people mover is being serviced;
applying, by the system controller module, the telemetry data or the mobile device data to a generative AI model to identify one or more steps to resolve the technical condition of the people mover; and
transmitting, by the system controller module, to the mobile device, resolution data including the one or more steps to resolve the technical condition of the people mover.

10. The method of claim 9, including determining, by the system controller module, the occurrence of the trigger event from one or more of a continued duration of maintenance that is above a threshold, or an occurrence of one or more error codes, as implicated in the telemetry data; and/or including determining, by the system controller module, the occurrence of the trigger event from a query for assistance, as indicated in the mobile device data.

11. The method of claim 9 or 10, comprising applying, by the generative AI model, natural language processing to respond to queries presented in a natural language format in the mobile device data; and/or
comprising processing, by the generative AI model, video, audio and text integrated into the resolution data.

12. The method of any of claims 9 to 11, comprising training the generative AI model on data including one or more of commissioning data, heartbeat data, code version update data and maintenance data.

13. The method of any of claims 9 to 13, further including integrating, in the telemetry data, sensor data from a sensor, and the sensor data includes one or more of a speed sensor, a vibration sensor, a load sensor, an accelerometer, a door operation sensor and a health sensor, and/or including .
detecting, by the system controller module from the sensor data from the health sensor, a mechanical failure in the people mover.

14. The method of any of claims 9 to 14, including communicating via the first communication channel utilizing a wired or a wireless protocol and communicating via the second communication channel via a wireless protocol that is the same as or different from the first communication channel; and/or
wherein the people mover is an elevator system, a moving walkway or an escalator.
